Europäisches Patentamt

European Patent Office

Office européen des brevets

(11) Publication number: **0 272 054 B1**

# EUROPEAN PATENT SPECIFICATION

(45) Date of publication of patent specification: **18.09.91**   (51) Int. Cl.5: **A01K 5/02**

(21) Application number: **87310866.6**

(22) Date of filing: **10.12.87**

(54) A computer controlled dry fodder supply system, in particular for use in piggeries.

(30) Priority: **15.12.86 DK 6032/86**

(43) Date of publication of application:
**22.06.88 Bulletin 88/25**

(45) Publication of the grant of the patent:
**18.09.91 Bulletin 91/38**

(84) Designated Contracting States:
**DE FR GB NL SE**

(56) References cited:
**DE-A- 1 816 597**
**DE-A- 2 035 476**
**DE-A- 2 341 893**
**SE-A- 8 502 307**
**SE-C- 220 431**

(73) Proprietor: **SKIOLD DATAMIX A/S**
**Nr Lindvej 30 Lind**
**DK-7400 Herning(DK)**

(72) Inventor: **Stougaard, Peter**
**No. 93 Ostertoften**
**Lind 7400 Herning(DK)**

(74) Representative: **Raffnsoee, Knud Rosenstand**
**et al**
**Internationalt Patent-Bureau Hoeje Taastrup**
**Boulevard 23**
**DK-2630 Taastrup(DK)**

## Description

This invention relates to a computer controlled dry fodder supply system, in particular for use in piggeries, comprising a feedstuff silo which through a conveyor communicates with a fodder machine supported by a weighing device recording the quantity of fodder used for one feeding, said machine being via a feeder string in a position to advance fodder to a number of feeding stations and said feeder string being in flow connection with a dosage mechanism at each feeding station.

An automatic fodder system is frequently practised in piggeries which distributes fodder to each individual pig, for example in dependence on their weight, condition and possible pregnancy. This provides for obtaining a correct breeding and thereby quality control of the pork when slaughtering, and the manual work with respect to feeding is at the same time considerably reduced.

Generally, there is a feeding station per pig in systems of the above mentioned type and as regards each feeding procedure it is aimed at giving each pig a predetermined feed ration. In a prior system this is effected by providing each feeding station with a mechanical weighing means measuring a predetermined weight quantity of fodder for each feeding. The pig-breeder must then adjust each weighing means separately and due to the vast number of weighing means the system further suffers from the drawback to be expensive in production and maintenance.

DE-A-2 035 476 discloses a system of the kind mentioned in the opening portion and according to which the weighing device individually weighs out a quantity of fodder for each feeding station and the conveyor separately supplies the individual feed rations to the feeding stations.

Another known system practises a central computer control of the dosage, the fodder being measured volumetrically at each feeding station by means of a chamber having an adjustable discharge volume. As the density of the fodder to be used differ from one consignment of fodder to another, this method is inaccurate and may give rise to considerable variations in the allocated quantities of fodder.

It is therefore the object of the invention to provide a dry fodder supply system which in an inexpensive, centrally controlled and simple manner offers a precise weight quantity of fodder to each pig at each feeding procedure, even in case the fodder to be consumed differs with respect to density.

In a dry fodder supply system of the above mentioned type this is according to the invention obtained in that the dosage mechanism includes a dosage chamber, the capacity of which constituting only a small fraction of the quantity of fodder being used for feeding one animal, the number of releases of said chamber per feeding being controlled by the computer, and that on the basis of the total weight of fodder for a number of feedings the computer is adapted to calculate the average weight of fodder per dose.

In view of the fact that a feeding station with a dosage mechanism and a dosage chamber may be embodied in a simple manner the system is inexpensive, simple and reliable in operation and it provides for effecting the feedings in the course of a short period of time.

The small capacity of each dosage chamber offers together with knowing the total number of releases of the dosage chambers per feeding a precise determination of the released volume of fodder. The weighing device supporting the fodder machine records the total mass of the released volume of fodder. On the basis of the mass and volume of consumed fodder the computer determines the density of the fodder and the allocated weight quantities of fodder become more precise for each feeding from a separate consignment of fodder. The small capacity of the dosage chamber also allows for allocating the quantity of fodder at subtle graduations.

Each dosage mechanism is preferably provided with a storage connected with the feeder string and having a capacity corresponding to at least one feed ration and preferably about two feed rations for one animal, for example 5 to 6 kg fodder. This ensures that the dosage chamber is uniformly and rapidly filled after each discharge and that the recording of the total mass of the released volume of fodder may be simply effected.

An embodiment of a system according to the invention will now be explained more specifically with reference to the accompanying drawing, in which

Fig. 1 diagrammatically illustrates a dry fodder supply system according to the invention, and

Fig. 2 is a sectionally schematical side elevation of a feeding station of the system in Fig. 1.

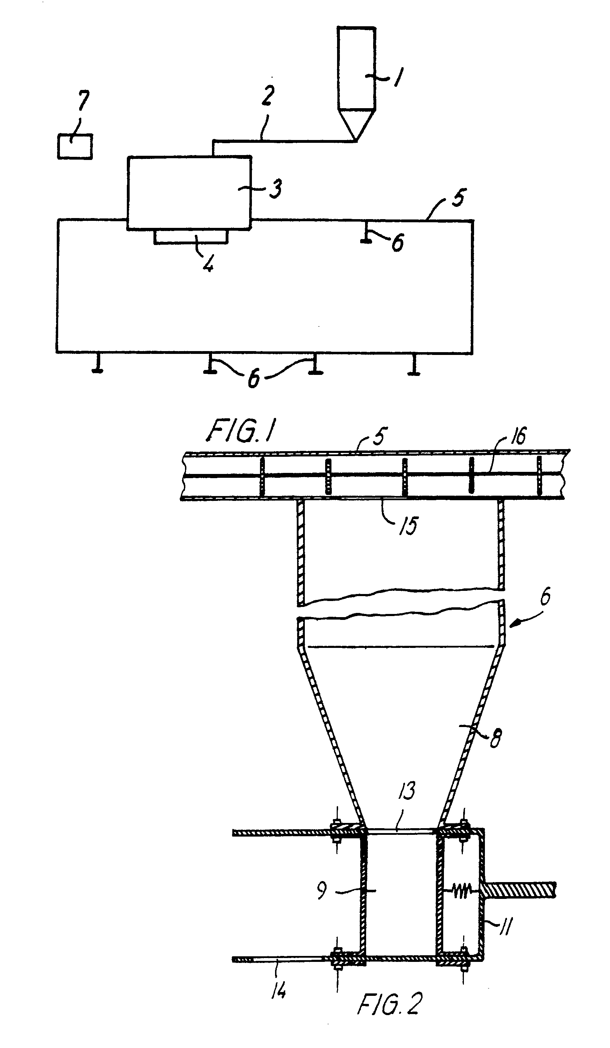

In the system illustrated in Fig. 1 a silo 1 may contain a lot of ready-mixed fodder delivered for example by a produce merchant. A conveyor 2 connects the silo with a fodder machine 3 mounted on a weighing device 3. The fodder machine may by means of a feeder string 5 which together with the fodder machine forms a closed loop for advancing fodder, distribute fodder to a number of feeding stations 6. A computer 7 controls the operation of the conveyor 2, the fodder machine 3 and the individual feeding stations 6.

Fig. 2 illustrates an embodiment of a feeding station 6 comprising a dosage mechanism with a storage 8 and a dosage chamber 9. The feeder string 5 which in Fig. 2 includes a pipeline containing a scraper conveyor 16 may advantageously be positioned above the store 8 and have an opening 15 at the bottom so as to discharge fodder directly from the string and down into the storage. The storage 8 may typically have a capacity of 5 to 6 kg fodder and have a conical lower portion so that the fodder by itself slides down towards an inlet opening 13 provided at the bottom of the storage and leading to the dosage chamber 9. The capacity of the dosage chamber constitutes only a small fraction of that of the storage, it accommodates for example 100 g fodder, thereby allowing a subtle graduation of the quantity of allocated fodder. Upon each release of the dosage mechanism a chamber volume of fodder will be discharged into a pig trough. The dosage mechanism is provided with a substantially horizontally movable forked drawarm 11 with branches capable of blocking either the upper or the lower opening of the dosage chamber 9. Either branch is provided with a hole 13 and 14, resp., which are mutually and horizontally staggered so that the drawarm, movable between two extreme positions, in one extreme position blocks the bottom and opens the top of the dosage chamber for filling it with fodder and in the second extreme position blocks the top and opens the bottom of the dosage chamber which is thereby emptied. The moving of the drawarm between the two extreme positions may be effected in an arbitrarily known manner and also other types of dosage mechanisms, e.g. those having a cellular wheel, are applicable.

The system is ready to effect the feeding when all stores 8 have been filled form the fodder machine 3. The weight quantity of fodder to be supplied to the animal concerned at each feeding station 6 is coded in the computer 7 and on the basis of the estimated density the approximate feed ration accommodated in the dosage chamber 9 is coded as well so that the computer can calculate and control the number of chamber releases at each feeding station.

After the feeding procedure has been completed all stores 8 are refilled and the total quantity of the fodder necessary for that purpose is recorded by means of the weighing device 4 carrying the fodder machine 3. Form said total weight and the complete number of chamber discharges the computer 7 calculates the exact weight of each feed ration or dose and on this basis the number of chamber releases per feeding may be adjusted if needed, appropriately according to the average value of for example ten feedings.

The chambers at each feeding station may be replaced by a single chamber provided in the fodder machine and the feeder string may instead of a scraper conveyor for instance include a helical conveyor.

## Claims

1. A computer controlled dry fodder supply system, in particular for use in piggeries, comprising a feedstuff silo (1) which through a conveyor (2) communicates with a fodder machine (3) supported by a weighing device (4) recording the quantity of fodder used for a feeding, said machine being via a feeder string (5) in a position to advance fodder to a number of feeding stations (6) and said feeder string (5) being in the flow connection with a dosage mechanism at each feeding station (6), characterized in that the dosage mechanism includes a dosage chamber (9), the capacity of which constituting only a small fraction of the quantity of fodder used for feeding one animal, the number of releases of said chamber (9) per feeding being controlled by the computer (7), and that on the basis of the total weight of fodder for a number of feedings the computer (7) is adapted to calculate the average weight of fodder per dose.

2. A system as claimed in claim 1, characterized in that each dosage mechanism is provided with a storage (8) connected with the feeder string (5) and having a capacity corresponding to at least one or more feed rations for one animal, for example 5 to 6 kg fodder.

## Revendications

1. Système d'approvisionnement de fourrage sec, commandé par ordinateur, en particulier pour utilisation dans les porcheries, comprenant un silo à fourrage (1) qui par un convoyeur (2) est en communication avec une machine d'affouragement (3) supportée par un dispositif de pesage (4) enregistrant la quantité de fourrage utilisé pour un affouragement, cette machine étant agencée pour, via une ligne d'affouragement (5), alimenter en fourrage un nombre de stations d'affouragement (6), et ladite ligne d'affouragement (5) étant en liaison a écoulement avec un mécanisme de dosage à chaque station d'affouragement (6), caractérisé en ce que le mécanisme de dosage comprend une chambre de dosage (9) dont la capacité ne constitue qu'une fraction de la quantité de fourrage utilisée pour l'affouragement d'un animal, le nombre de déclenchements de cette chambre (9) par affouragement étant commandé par l'ordinateur (7), et en ce que l'ordinateur (7) est conçu pour, sur la base du poids total de fourrage pour un nombre d'affouragements, calculer le poids moyen de fourrage par dose.

2. Système selon la revendication 1, caractérisé en ce que chaque mécanisme de dosage est pourvu d'un magasin (8) relié à la ligne d'affouragement (5) et dont la capacité correspond à au moins une ou plusieurs rations de fourrage pour un animal, par exemple 5 à 6 kg de fourrage.

**Patentansprüche**

1. Mit Computer kontrolliertes Trockenfutter-Versorgungssystem, besonders zur Verwendung in Schweineställen, umfassend einen Futtermittelsilo (1), der durch einen Conveyor (2) mit einer auf einer Wiegevorrichtung (4), die die für eine Fütterung gebrauchte Futtermenge aufzeichnet, gelagerten Futtermaschine (3) in Verbindung steht, wobei die Futtermaschine mittels eines Förderers (5) Futter an eine Anzahl von Futterstationen (6) weiterleiten kann, und der Förderer (5) mit einem bei jeder Futterstation (6) vorgesehenen Dosiermechanismus in Strömungsverbindung steht, dadurch **gekennzeichnet,** dass der Dosiermechanismus eine Dosierkammer (9) umfasst, deren Kapazität nur einen Bruchteil der zur Fütterung eines einzelnen Tieres erforderlichen Futtermenge ausmacht, dass die Anzahl von Auslösungen der Kammer (9) pro Fütterung von dem Computer (7) kontrolliert wird, und dass auf Basis des für eine Anzahl von Fütterungen erforderlichen Totalgewichts von Futter der Computer (7) das durchschnittliche Gewicht von Futter pro Dosis berechnen kann.

2. System nach Anspruch 1, dadurch **gekennzeichnet,** dass jeder Dosiermechanismus mit einem an den Förderer (5) angeschlossenen Speicher (8) versehen ist, der eine Kapazität von einer oder mehreren Futterrationen pro Tier, z.B. 5 bis 6 kg Futter, aufweist.

FIG.1

FIG.2